# EUROPEAN PATENT SPECIFICATION

(11) **EP 4 678 531 B1**
(45) Date of publication and mention of the grant of the patent: **17.06.2026**
(21) Application number: 24188466.7
(22) Date of filing: 12.07.2024
(51) Int. Cl.: H02K 7/14, H02K 5/04, H02K 21/14

(54) **AN ELECTRIC POD MARINE DRIVE UNIT**
ELEKTRISCHE POD-SCHIFFSANTRIEBSEINHEIT
UNITÉ D'ENTRAÎNEMENT MARIN DE NACELLE ÉLECTRIQUE

(43) Date of publication of application: 14.01.2026
(73) Proprietor: Volvo Penta Corporation, 405 08 Göteborg (SE)
(72) Inventor: CARLSSON, Lars-Gunnar, 423 39 TORSLANDA (SE)
(74) Representative: Ström & Gulliksson AB

(56) References cited:
- US-A1- 2005 170 709
- US-A1- 2005 221 692
- US-A1- 2012 094 555
- US-A1- 2015 015 105

## Description

### TECHNICAL FIELD

The disclosure relates to an electric POD marine drive unit. The disclosure can be applied to marine vessels, such as water crafts, motorboats, work boats, sport vessels, boats, ships, among other vessel types. Although the disclosure may be described with respect to a particular marine vessel, the disclosure is not restricted to any particular marine vessel.

### BACKGROUND

In the realm of marine propulsion systems, the effectiveness and efficiency of electric drive units, such as POD drives, are critical factors in their performance. These systems conventionally comprise a casing that houses an electric motor, which includes a rotor and a stator, and a propeller attached to the rotor. The rotor, powered by the electric motor, drives the propeller to generate thrust. A common challenge in such systems is optimizing the torque output of the electric motor, which is a critical factor in the propulsion system's overall thrust and maneuverability capabilities. Prior art can be found in US2005/221692A1.

### SUMMARY

According to a first aspect of the disclosure, an electric POD marine drive unit, comprising an electric machine being submersible, the electric machine has a rotor and a stator, the rotor is rotatable within the stator, the stator has an inner face arranged opposite the rotor and an outer face, wherein the outer face of the stator functions as an outer housing of a part of the drive unit. The first aspect of the disclosure may seek to provide an electric POD marine drive unit having an increased output. A technical benefit may include enhanced torque output due to the increased diameter of the stator, which allows for greater propulsion power without increasing the overall size of the drive unit. This configuration addresses the limitations of prior solutions by enabling a larger stator diameter without compromising the hydrodynamic properties of the vessel, thereby reducing drag through the water and maintaining optimal efficiency.

According to the invention, the rotor has an outer rotor face facing the inner face of the stator. A technical benefit may include improved efficiency in magnetic interaction between the rotor and stator, enhancing overall motor performance.

Optionally in some examples, including in at least one preferred example, the outer rotor face comprises a plurality of magnet arrays arranged around a circumference of the outer rotor face. A technical benefit may include increased magnetic field strength, providing higher torque output.

According to the invention, the rotor is hollow and has an inner rotor diameter. A technical benefit may include reduced weight of the rotor, improving the response time and efficiency of the electric machine.

Optionally in some examples, including in at least one preferred example, the inner face of the stator comprises a plurality of stator coils. A technical benefit may include enhanced electromagnetic induction, boosting the machine's efficiency and power output.

Optionally in some examples, including in at least one preferred example, the stator coils are mounted on the inner face or fully or partly embedded in the inner face. A technical benefit may include improved structural integrity and heat dissipation of the stator.

According to the invention, the inner face is made of a soft magnetic composite. A technical benefit may include reduced eddy current losses, increasing the efficiency of the machine. In addition, the drive unit may have a reduced weight and the stator diameter may be increased thereby providing an increased torque output.

Optionally in some examples, including in at least one preferred example, the outer face of the stator is facing the water when the drive unit is submerged. A technical benefit may include direct cooling by the surrounding water, improving thermal management.

Optionally in some examples, including in at least one preferred example, the part of the drive unit is the part housing the electric machine. A technical benefit may include streamlined integration within the overall propulsion system.

Optionally in some examples, including in at least one preferred example, further comprising a control unit, the control unit is operatively connected with the electric machine. A technical benefit may include precise and efficient control of the machine's operation.

Optionally in some examples, including in at least one preferred example, the electric POD marine drive unit is rotatably connected with a hull of the marine vessel. A technical benefit may include enhanced maneuverability and positioning of the marine vessel.

Optionally in some examples, including in at least one preferred example, further comprising a mechanism configured to rotate the electric POD marine drive unit in a mode of operation. A technical benefit may include precise directional control of the marine vessel.

Optionally in some examples, including in at least one preferred example, the electric machine is connected with a power supply. A technical benefit may include consistent and reliable power delivery to the drive unit.

According to a second aspect of the disclosure, a marine vessel comprising the electric POD marine drive unit of any of the claims 1-12. The second aspect of the disclosure may seek to provide a marine vessel with the electric POD marine drive unit having increased torque output. A technical benefit may include enhanced torque output due to the increased diameter of the stator, which allows for greater propulsion power without increasing the overall size of the drive unit and thereby providing a higher performance of the marine vessel. This configuration addresses the limitations of prior solutions by enabling a larger stator diameter without compromising the hydrodynamic properties of the marine vessel, thereby reducing drag through the water and maintaining optimal efficiency.

Optionally in some examples, including in at least one preferred example, the marine vessel has a hull, the electric POD marine drive unit is rotatably connected with the hull in a mode of operation. A technical benefit may include precise directional control of the marine vessel.

The disclosed aspects, examples (including any preferred examples), and/or accompanying claims may be suitably combined with each other within the scope of the claims. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary electric POD marine drive unit according to an example.
**FIG. 2** is a partly view of a stator and a rotor of an electric machine according to an example.
**FIG. 3** is a cross-sectional view stator and a rotor of an electric machine according to an example.
**FIG. 4** is another exemplary electric POD marine drive unit according to an example.
**FIG. 5** is an exemplary marine vessel according to an example.
**FIG. 6** is another view of **FIG. 1****,** according to an example.

### DETAILED DESCRIPTION

The detailed description set forth below provides information and examples of the disclosed technology with sufficient detail to enable those skilled in the art to practice the disclosure.

The effectiveness and efficiency of electric drive units, such as POD drives, are critical factors in their performance. These systems conventionally comprise a casing that houses an electric motor, which includes a rotor and a stator, and a propeller attached to the rotor. Existing solutions have limitations in the current designs, particularly concerning the configuration of the electric machine within the drive unit. Typically, the diameter of the electric machine, and consequently the stator and rotor, is restricted by the dimensions of the casing. This confinement limits the potential optimization of the torque output without significantly redesigning or enlarging the entire unit, which could adversely affect the hydrodynamic properties of the vessel by increasing the drag through water.

The present disclosure addresses the limitations of the prior solutions by enabling a larger stator diameter without compromising the hydrodynamic properties of the vessel, thereby reducing drag through the water and maintaining optimal efficiency. Additionally, the use of the stator as the outer housing improves heat dissipation, reducing maintenance requirements and extending the lifespan of critical components such as bearings and seals.

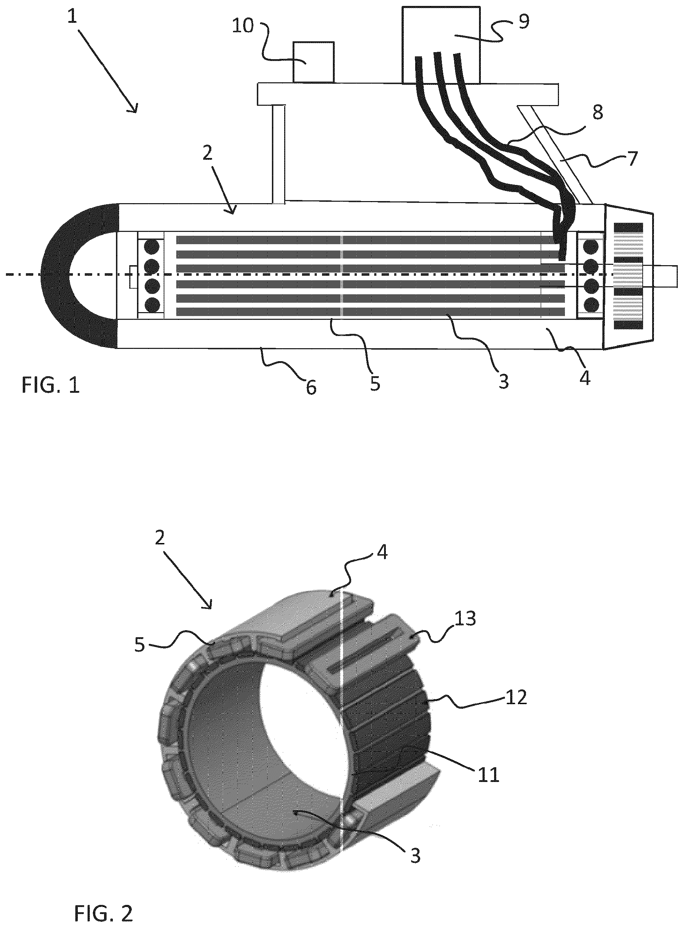

**FIG. 1** is an exemplary an electric POD marine drive unit **1** according to an example. **FIG. 1** show the electric POD marine drive unit **1** in a cross-section view. The electric POD marine drive unit **1** comprises an electric machine **2** being submersible, the electric machine **2** has a rotor **3** and a stator **4,** the rotor **3** is rotatable within the stator **4.** Furthermore, the stator **4** has an inner face **5** arranged opposite the rotor **3** and an outer face **6.** The outer face **6** of the stator **4** functions as an outer housing of a part of the drive unit **1.** The outer face **6** of the stator **4** is facing the water when the drive unit **1** is submerged. A technical advantage may include direct cooling by the surrounding water, improving thermal management.

The outer face **6** may be made of an impermeable material or may be coated with an impermeable material. A technical advantage may include protection against water ingress, ensuring the longevity of the components within the POD.

The electric POD marine drive unit **1** may have many different shapes and designs reducing drag in the water while being moved through the water. In **FIG. 1****,** the drive unit **1** has a longitudinal extension and is circular along the longitudinal extension. The drive unit **1** has the electric machine **2** and an attachment part **7** which connect the electric machine **2** with a hull of the marine vessel. In addition, the attachment part **7** may have routing of different wires, supply lines **8** and conduits extending from the marine vessel to the electric machine **2** or vice versa. The electric machine **2** is connected with a power supply **9,** such as battery. A technical advantage may include consistent and reliable power delivery to the drive unit **1.**

Moreover, a control unit **10** is arranged. The control unit **10** is operatively connected with the electric machine **2.** A technical advantage may include precise and efficient control of the machine's operation. The control unit **10** may include a microprocessor, microcontroller, programmable digital signal processor or another programmable device. The control unit **10** may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In **FIG. 2****,** a partly view of a stator **4** and a rotor **3** of an electric machine **2** according to an example is shown. The rotor **3** has an outer rotor face **11** facing the inner face **5** of the stator **4.** A technical advantage may include improved efficiency in magnetic interaction between the rotor **3** and stator **4,** enhancing overall machine performance. The outer rotor face **11** may comprise a plurality of magnet arrays **12** arranged around a circumference of the outer rotor face **11.** A technical advantage may include increased magnetic field strength, providing higher torque output. The inner face **5** of the stator **4** may comprise a plurality of stator coils **13.** A technical advantage may include enhanced electromagnetic induction, boosting the machine's efficiency and power output. The stator coils **13** may be mounted on the inner face **5** or fully or partly embedded in the inner face **5.** A technical advantage may include improved structural integrity and heat dissipation of the stator **4.**

Moreover, the inner face is made of a soft magnetic composite (SMC). A technical advantage may include reduced eddy current losses, increasing the efficiency of the machine. Soft magnetic composite are made of metal powder particles, such as iron or other metals, coated with an electrically insulating layer and they may be formed into different shapes using powder metallurgy, thereby allowing three-dimensional magnetic circuit design. Hence, the stator **4** may be made of soft magnetic composite. In addition, by providing the stator of soft magnetic composite a compact design of stator is obtained, both in relation to size and weight. In addition, it is possible to increase the diameter of the stator so that a higher torque output is obtainable without increasing the overall size of the electric machine **2.** Also, it is possible to maintain the same torque output as the prior solutions with a smaller diameter of the electric machine **2.** By supplying electric current to the stator **4** made of soft magnetic composite an electromagnet field is created.

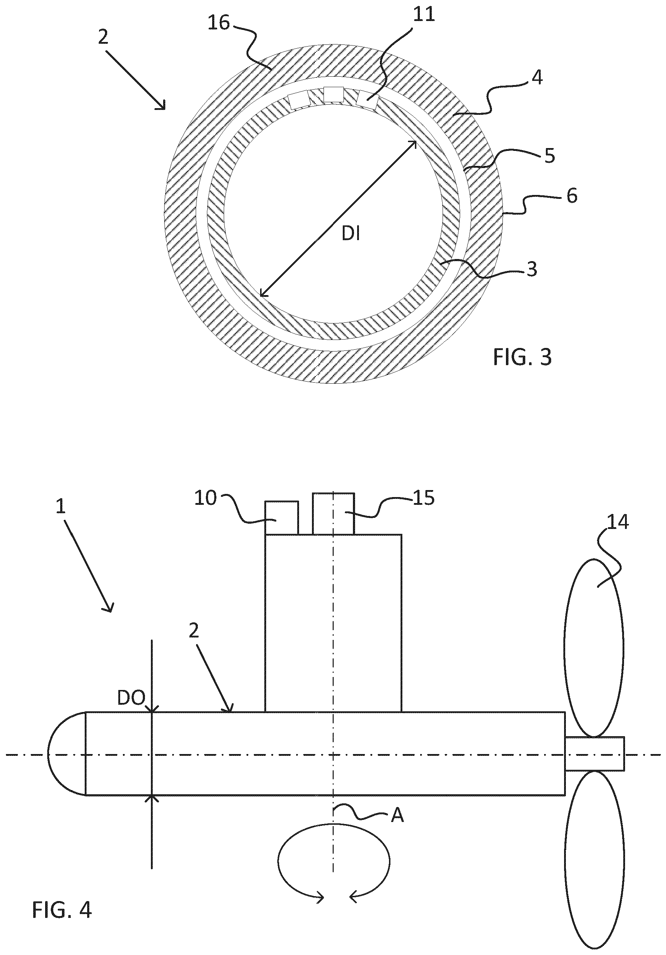

In **FIG. 3****,** a cross-sectional view of the electric machine **2** is shown. The stator **4** may be made of soft magnetic composite as described above and the rotor **3** may comprise a plurality of magnetic arrays **12** arranged around the circumference of the rotor. The magnetic arrays **12** may be arranged on the outer rotor face or being embedded in the outer rotor face. The rotor may be hollow and having an inner rotor diameter **D_{I}.** A technical advantage may include reduced weight of the rotor, improving the response time and efficiency of the machine. In addition, one or more additional rotors or a member of another rotor may be provided in the hollow rotor.

Furthermore, a wall **16** is arranged between the inner face **5** and the outer face **6** of the stator **4,** the wall has a thickness. A technical advantage may include structural strength and separation of different functional areas within the machine.

Also, the rotor **3** may be made of a metal or a composite material. A technical advantage may include enhanced durability and performance due to the choice of materials.

In **FIG. 4****,** another example of an electric POD drive unit **1** is shown. The rotor is configured to rotate a propeller **14.** A technical advantage may include direct propulsion, translating motor torque into thrust efficiently. The electric POD marine drive unit 1 may be rotatably connected with a hull of the marine vessel. A technical advantage may include enhanced maneuverability and positioning of the marine vessel. The electric POD drive unit **1** may further comprise a mechanism **15** configured to rotate the electric POD marine drive unit **1** in a mode of operation around an axis A. A technical advantage may include precise directional control of the vessel. The mechanism may be a belt drive, a gearing system or the like. In addition, the control unit **10** may be operatively connected with the mechanism **15.** A technical advantage may include integrated control of propulsion and steering.

The electric machine **2** has an outer diameter **D_{O},** the outer diameter is substantially identical to the diameter of the stator, so that the outer face of the stator functions as an outer housing of a part of the drive unit **1.**

The electric POD drive unit may also comprise a second electric machine having a second rotor and a second stator. A technical advantage may include redundancy and increased power output for more demanding applications as well as the second electric machine may rotate a second propeller. The second electric machine is arranged adjacent to the electric machine. A technical advantage may include compact design, optimizing space usage within the drive unit. The second rotor has a first member being arranged opposite the second stator and a second member configured to extend along and inside the rotor. A technical advantage may include enhanced magnetic coupling and efficiency. The first member comprises a plurality of second magnet arrays and the second member is without second magnet arrays. A technical advantage may include optimized magnetic field distribution, improving motor performance.

Also, the second stator comprises a second inner face and a second outer face, the second inner face is arranged opposite the first member of the second rotor. A technical advantage may include improved electromagnetic interaction within the second motor. The second inner face comprises a plurality of second stator coils or it may be made of a soft magnetic composite as described above. A technical advantage may include increased power output and efficiency of the second motor.

The stator coils of the stator and the second stator coils of the second stator are separated or the soft magnetic composite of the stator and the soft magnetic composite of the second stator may be separated. A technical advantage may include independent operation and control of each machine.

The second rotor may be configured to rotate a second propeller. A technical advantage may include enhanced propulsion capabilities with dual propellers. The propeller **14** and/or the second propeller may be arranged for pulling a marine vessel. A technical advantage may include improved maneuverability and efficiency in certain operational modes. Also, the propeller **14** and/or the second propeller may be arranged for pushing a marine vessel. A technical advantage may include versatile thrust options for different navigational requirements.

Furthermore, the propeller **14** and the second propeller may be counter-rotating. A technical advantage may include balanced thrust and reduced torque-induced vessel yaw.

The control unit **10** may also be operatively connected with the second electric machine. A technical advantage may include synchronized control for optimal performance. The control unit is configured to control the electric machine and the second electric machine independent of each other. A technical advantage may include flexibility in operation and redundancy.

In addition, the electric POD marine drive unit 1 may be moveable between a storage position and an operation position. A technical advantage may include protection of the drive unit when not in use, extending its operational life. The electric POD marine drive unit **1** may be positioned within the hull of the marine vessel in the storage position. A technical advantage may include reduced drag and exposure to environmental elements when the drive unit is not in use.

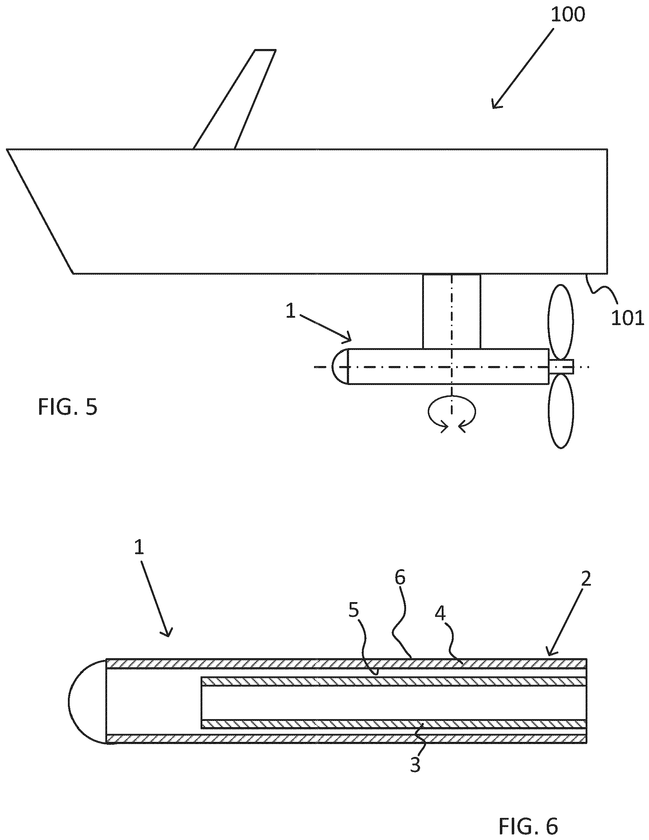

In **FIG. 5****,** a marine vessel **100** comprising the electric POD marine drive unit **1** as described above is shown. The marine vessel **100** has a hull **101,** the electric POD marine drive unit **1** is rotatably connected with the hull **101** in a mode of operation. A technical advantage may include enhanced maneuverability and operational flexibility. Also, the hull **101** has an opening wherein the electric POD marine drive unit **1** may be retracted to in a storage position. A technical advantage may include reduced drag and protection of the drive unit when retracted.

The present disclosure also relates to use of an electric machine **2** comprising a rotor **3** and a stator **4,** the rotor **3** is rotatable within the stator **4,** the stator **4** has an inner face arranged opposite the rotor **3** and an outer face, for an electric POD marine drive unit **1** wherein the outer face of the stator functions as an outer housing of a part of the drive unit. A technical advantage may include efficient design, utilizing the stator as both a functional and structural component.

Furthermore, the present disclosure also relates to use of soft magnetic composite for a stator **4** of an electric machine **2,** the electric machine **2** is comprised in an electric POD marine drive unit **1** wherein the stator **4** functions as an outer housing of a part of the drive unit.

**FIG. 6** is another view of **FIG. 1****,** according to an example. In **FIG.6****,** an electric POD marine drive unit **1** is shown in a cross-sectional view. The electric POD marine drive **1** comprises an electric machine **2** being submersible, the electric machine **2** has a rotor **3** and a stator **4,** the rotor **3** is rotatable within the stator **4,** the stator **4** has an inner face **5** arranged opposite the rotor **3** and an outer face **6,** the outer face **6** of the stator **4** functions as an outer housing of a part of the drive unit **1.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the appended claims. In the drawings and specification, there have been disclosed aspects for purposes of illustration only and not for purposes of limitation, the scope of the disclosure being set forth in the following claims.

## Claims

1. An electric POD marine drive unit (**1**), comprising
an electric machine (**2**) being submersible, the electric machine has a rotor (**3**) and a stator (**4**), the rotor (**3**) is rotatable within the stator (**4**), the stator (**4**) has an inner face (**5**) arranged opposite the rotor and an outer face (**6**),
wherein the rotor (**3**) is hollow and has an inner rotor diameter (**D_{I}**)
wherein the outer face (**6**) of the stator (**4**) functions as an outer housing of a part of the drive unit (**1**), an outer diameter of the electric machine (**2**) is substantially identical to the diameter of the stator (**4**),
wherein the inner face (**5**) is made of a soft magnetic composite.

2. The electric POD marine drive unit (**1**) of claim 1, wherein the rotor (**3**) has an outer rotor face (**11**) facing the inner face (**5**) of the stator.

3. The electric POD marine drive unit (**1**) of claim 2, wherein the outer rotor face (**11**) comprises a plurality of magnet arrays (**12**) arranged around a circumference of the outer rotor face.

4. The electric POD marine drive unit (**1**) of any of the claims 1-3, wherein the rotor (**3**) is made of a metal or a composite material.

5. The electric POD marine drive unit (**1**) of any of the claims 1-4, wherein the inner face (**5**) of the stator (**4**) comprises a plurality of stator coils (**13**).

6. The electric POD marine drive unit (**1**) of claim 5, wherein the stator coils (**13**) are mounted on the inner face or fully or partly embedded in the inner face.

7. The electric POD marine drive unit (**1**) of any of the claims 1-6, wherein the outer face (**6**) of the stator (**4**) is facing the water when the drive unit is submerged.

8. The electric POD marine drive unit (**1**) of any of the claims 1-7, wherein the part of the drive unit (**1**) is the part housing the electric machine.

9. The electric POD marine drive unit (**1**) of any of the claims 1-8, further comprising a control unit (**10**), the control unit (**10**) being operatively connected with the electric machine (**2**).

10. The electric POD marine drive unit (**1**) of any of the claims 1-9, wherein the electric POD marine drive unit (**1**) is rotatably connected with a hull of the marine vessel.

11. The electric POD marine drive unit (**1**) of claim 10, further comprising a mechanism (**15**) configured to rotate the electric POD marine drive unit in a mode of operation.

12. The electric POD marine drive unit (**1**) of any of the claims 1-11, wherein the electric machine (**2**) is connected with a power supply (**9**).

13. A marine vessel (**100**) comprising the electric POD marine drive unit (**1**) of any of the claims 1-12.

14. The marine vessel (**100**) of claim 13, wherein the marine vessel (**100**) has a hull (101), the electric POD marine drive unit (**1**) is rotatably connected with the hull (**101**) in a mode of operation.

## Patentansprüche

1. Elektrische POD-Schiffsantriebseinheit **(1),** umfassend
eine elektrische Maschine **(2),** die tauchfähig ist, wobei die elektrische Maschine einen Rotor **(3)** und einen Stator **(4)** aufweist, der Rotor **(3)** innerhalb des Stators **(4)** drehbar ist, der Stator **(4)** eine Innenfläche **(5),** die gegenüber dem Rotor angeordnet ist, und eine Außenfläche **(6)** aufweist,
wobei der Rotor **(3)** hohl ist und einen inneren Rotordurchmesser **(D_{I})** aufweist,
wobei die Außenfläche **(6)** des Stators **(4)** als Außengehäuse eines Teils der Antriebseinheit **(1)** fungiert und ein Außendurchmesser der elektrischen Maschine (2) im Wesentlichen gleich wie der Durchmesser des Stators **(4)** ist,
wobei die Innenfläche **(5)** aus einem weichen magnetischen Verbundwerkstoff gefertigt ist.

2. Elektrische POD-Schiffsantriebseinheit **(1)** nach Anspruch 1, wobei der Rotor **(3)** eine äußere Rotorfläche **(11)** aufweist, die der Innenfläche **(5)** des Stators zugewandt ist.

3. Elektrische POD-Schiffsantriebseinheit **(1)** nach Anspruch 2, wobei die äußere Rotorfläche **(11)** eine Vielzahl von Magnetanordnungen **(12)** umfasst, die um einen Umfang der äußeren Rotorfläche angeordnet sind.

4. Elektrische POD-Schiffsantriebseinheit **(1)** nach einem der Ansprüche 1-3, wobei der Rotor **(3)** aus einem Metall oder einem Verbundwerkstoff gefertigt ist.

5. Elektrische POD-Schiffsantriebseinheit **(1)** nach einem der Ansprüche 1-4, wobei die Innenfläche **(5)** des Stators **(4)** eine Vielzahl von Statorspulen **(13)** umfasst.

6. Elektrische POD-Schiffsantriebseinheit **(1)** nach Anspruch 5, wobei die Statorspulen **(13)** an der Innenfläche montiert oder ganz oder teilweise in die Innenfläche eingebettet sind.

7. Elektrische POD-Schiffsantriebseinheit **(1)** nach einem der Ansprüche 1-6, wobei die Außenfläche **(6)** des Stators **(4)** dem Wasser zugewandt ist, wenn die Antriebseinheit eingetaucht ist.

8. Elektrische POD-Schiffsantriebseinheit **(1)** nach einem der Ansprüche 1-7, wobei der Teil der Antriebseinheit (1) der Teil ist, in dem die elektrische Maschine untergebracht ist.

9. Elektrische POD-Schiffsantriebseinheit **(1)** nach einem der Ansprüche 1-8, ferner umfassend eine Steuereinheit **(10),** wobei die Steuereinheit **(10)** funktionsfähig mit der elektrischen Maschine **(2)** verbunden ist.

10. Elektrische POD-Schiffsantriebseinheit **(1)** nach einem der Ansprüche 1-9, wobei die Elektrische POD-Schiffsantriebseinheit **(1)** drehbar mit einem Rumpf des Schiffs verbunden ist.

11. Elektrische POD-Schiffsantriebseinheit **(1)** nach Anspruch 10, ferner umfassend einen Mechanismus **(15),** der konfiguriert ist, um die elektrische POD-Schiffsantriebseinheit in einem Betriebsmodus zu drehen.

12. Elektrische POD-Schiffsantriebseinheit **(1)** nach einem der Ansprüche 1-11, wobei die elektrische Maschine **(2)** mit einer Stromversorgung **(9)** verbunden ist.

13. Schiff **(100),** umfassend die elektrische POD-Schiffsantriebseinheit **(1)** nach einem der Ansprüche 1-12.

14. Schiff **(100)** nach Anspruch 13, wobei das Schiff **(100)** einen Rumpf **(101)** aufweist, die elektrische POD-Schiffsantriebseinheit **(1)** in einem Betriebsmodus drehbar mit dem Rumpf **(101)** verbunden ist.

## Revendications

1. Unité d'entraînement marin de nacelle électrique **(1),** comprenant
une machine électrique **(2)** submersible, la machine électrique comporte un rotor **(3)** et un stator **(4),** le rotor **(3)** peut tourner à l'intérieur du stator **(4),** le stator **(4)** a une face intérieure **(5)** agencée en face du rotor et une face extérieure **(6),**
dans lequel le rotor **(3)** est creux et a un diamètre de rotor intérieur **(D_{I})**
dans lequel la face extérieure **(6)** du stator **(4)** fait office de boîtier extérieur d'une partie de l'unité d'entraînement **(1),** un diamètre extérieur de la machine électrique (2) est sensiblement identique au diamètre du stator **(4),**
dans lequel la face intérieure **(5)** est constituée d'un composite magnétique doux.

2. Unité d'entraînement marin de nacelle électrique **(1)** selon la revendication 1, dans laquelle le rotor **(3)** a une face de rotor extérieure **(11)** orientée vers la face intérieure **(5)** du stator.

3. Unité d'entraînement marin de nacelle électrique **(1)** selon la revendication 2, dans laquelle la face de rotor extérieure **(11)** comprend une pluralité d'ensembles d'aimants **(12)** agencés autour d'une circonférence de la face de rotor extérieure.

4. Unité d'entraînement marin de nacelle électrique **(1)** selon l'une quelconque des revendications 1 à 3, dans laquelle le rotor **(3)** est constitué d'un métal ou d'un matériau composite.

5. Unité d'entraînement marin de nacelle électrique **(1)** selon l'une quelconque des revendications 1 à 4, dans laquelle la face intérieure **(5)** du stator **(4)** comprend une pluralité de bobines de stator **(13).**

6. Unité d'entraînement marin de nacelle électrique **(1)** selon la revendication 5, dans laquelle les bobines de stator **(13)** sont montées sur la face intérieure ou entièrement ou partiellement intégrées dans la face intérieure.

7. Unité d'entraînement marin de nacelle électrique **(1)** selon l'une quelconque des revendications 1 à 6, dans laquelle la face extérieure **(6)** du stator **(4)** est face à l'eau lorsque l'unité d'entraînement est immergée.

8. Unité d'entraînement marin de nacelle électrique **(1)** selon l'une quelconque des revendications 1 à 7, dans laquelle la partie de l'unité d'entraînement (1) est la partie abritant la machine électrique.

9. Unité d'entraînement marin de nacelle électrique **(1)** selon l'une quelconque des revendications 1 à 8, comprenant en outre une unité de commande **(10),** l'unité de commande **(10)** étant reliée de manière opérationnelle à la machine électrique **(2).**

10. Unité d'entraînement marin de nacelle électrique **(1)** selon l'une quelconque des revendications 1 à 9, dans laquelle l'unité d'entraînement marin de nacelle électrique **(1)** est reliée de façon rotative à une coque du navire.

11. Unité d'entraînement marin de nacelle électrique **(1)** selon la revendication 10, comprenant en outre un mécanisme **(15)** configuré pour faire tourner l'unité d'entraînement marin de nacelle électrique dans un mode de fonctionnement.

12. Unité d'entraînement marin de nacelle électrique **(1)** selon l'une quelconque des revendications 1 à 11, dans laquelle la machine électrique **(2)** est connectée à une alimentation électrique **(9).**

13. Navire **(100)** comprenant l'unité d'entraînement marin de nacelle électrique POD **(1)** selon l'une quelconque des revendications 1 à 12.

14. Navire **(100)** selon la revendication 13, dans lequel le navire **(100)** a une coque **(101),** l'unité d'entraînement marin de nacelle électrique POD **(1)** est reliée de façon rotative à la coque **(101)** dans un mode de fonctionnement.
